# EUROPÄISCHE PATENTSCHRIFT

(11) **EP 3 529 001 B1**
(45) Veröffentlichungstag und Bekanntmachung des Hinweises auf die Patenterteilung: **29.12.2021**
(21) Anmeldenummer: 17797534.9
(22) Anmeldetag: 20.10.2017
(51) Int. Cl.: B23Q 7/12, B65G 1/137

(54) **ABSORTIERUNTERSTÜTZUNGSVERFAHREN UND FLACHBETTWERKZEUGMASCHINE**
SORTING SUPPORT METHOD AND FLAT BED MACHINE TOOL
PROCÉDÉ D'AIDE AU TRIAGE ET MACHINE-OUTIL À BANC PLAT

(30) Priorität: 21.10.2016 DE 102016120131
(43) Veröffentlichungstag der Anmeldung: 28.08.2019
(73) Patentinhaber: Trumpf Werkzeugmaschinen GmbH + Co. KG, 71254 Ditzingen (DE)
(72) Erfinder: KIEFER, Manuel, 74889 Sinsheim (DE); OTTNAD, Jens, 76199 Karlsruhe (DE); SCHWARZ, Benjamin, 70825 Korntal-Münchingen (DE); WAHL, Eberhard, 73235 Weilheim an der Teck (DE); WEISS, Korbinian, 70825 Korntal (DE); DENECKE, Matthias, 02625 Bautzen (DE); SCHÖNE, David, 01920 Schoenteichen (DE); KRAUSE, Stefan, 02681 Wilthen (DE); KEIMEL, Falko, 01877 Bischofswerda (DE); SPRINGER, Philipp, 70374 Stuttgart (DE)
(74) Vertreter: Grättinger Möhring von Poschinger Patentanwälte Partnerschaft mbB
(86) Internationale Anmeldenummer: PCT/EP2017/076867
(87) Internationale Veröffentlichungsnummer: WO 2018/073419

(56) Entgegenhaltungen:
- EP-A1- 1 524 063
- DE-A1-102008 018 436
- JP-A- 2013 243 273

## Beschreibung

Die vorliegende Erfindung betrifft Verfahren zum Unterstützen des Absortiervorgangs von mit einer Flachbettwerkzeugmaschine erzeugten Werkstücken, insbesondere zum Integrieren des Absortiervorgangs in die Ansteuerung von Flachbettwerkzeugmaschinen. Ferner betrifft die Erfindung entsprechend ausgebildete Flachbettwerkzeugmaschinen und Werkstücksammelstelleneinheiten.

Beim Absortieren von Teilen an Werkzeugmaschinen, insbesondere von Laserschnittgut oder gestanzten Werkstücken, insbesondere Blechteilen, vergleicht üblicherweise ein Bediener visuell jedes einzelne geschnittene Teil mit einer Auftragszeichnung des jeweiligen Teils. Ein derartig meist Papier-basiertes Absortieren erfordert ein individuelles Suchen eines speziellen fertigen Teils und dessen Zuordnung zum richtigen Auftrag, so dass eine entsprechende Weiterverarbeitung eingeleitet werden kann. Geschnittene oder gestanzte Blechteile werden dabei nach dem Bearbeitungsvorgang häufig in einem Verbund dem jeweiligen nachgelagerten Produktionsschritt zur Verfügung gestellt. Werden insbesondere viele unterschiedliche Teilformen geschnitten, wird der visuelle Vergleich aufwändig und fehleranfällig. So kann eine hohe Teilevielfalt Probleme bei der Teilerkennung und dem nachfolgenden sortierenden Ablegen in z. B. auftragsspezifisch vorgesehenen Werkstücksammelstelleneinheiten hervorrufen. Werden Teile falsch abgelegt, kann ein nachfolgender Prozess negativ beeinträchtigt werden.

In EP 1 524 063 A1 ist ein Verfahren zur Markierung von Werkstücken offenbart, bei dem eine Platte geschnitten oder gestanzt wird. Dabei projiziert ein Projektor unterschiedliche optische Markierungen auf die geschnittenen bzw. gestanzten Werkstücke. Dieses Verfahren soll dem Bediener das Absortieren der Werkstücke erleichtern, indem es ihm die Werkstücke anzeigt, sowie ein Ablaufsteuerverfahren für die Weiterverarbeitung oder -verwendung solcher geschnittenen oder gestanzten Werkstücke angibt. Bei Werkstücken, die sehr klein sind, wie sie in der Blechbearbeitung häufig vorkommen, werden die Markierungen unter Umständen schlecht erkennbar, so dass Bediener zusätzlich auf das Papier-basierte Absortieren zurückgreifen.

Aus dem Bereich der Logistik sind verschiedene Verfahren zur Unterstützung von Arbeitern bekannt. Beispielsweise offenbaren WO 2014/028959 A1 ein Kamera-unterstütztes Verfahren zur Unterstützung eines Arbeiters bei Anlagen zur Manipulation von Waren, EP 1 487 616 B1 ein Verfahren zur automatischen Prozesskontrolle mit einer Arbeitsumgebungserfassung sowie EP 2 161 219 B1 und DE 10 2014 211353 A1 Verfahren der visuellen Unterstützung von manuellen Kommissioniervorgängen. Ferner sind als Beispiel eines digital unterstützten Kommissioniervorgangs sogenannte Pick-by-Light-Implementierungen bekannt.

Aus der DE 10 2008 018436 A1 ist ferner zum Beispiel ein Lagerregal mit automatischer Lagerortbuchung bekannt. Dabei ist eine Bilderfassungseinrichtung vorgesehen, die zur optischen Erfassung des in den Lagergutträgern abgelegten Lagerguts geeignet ist und daraus eine digitale Bildinformation erzeugen kann. Die digitale Bildinformation kann abgespeichert werden und ist mittels einer Anzeigeeinrichtung abrufbar.

Einem Aspekt dieser Offenbarung liegt die Aufgabe zugrunde, die Zuordnung zu erleichtern, Fehler bei der Zuordnung zur reduzieren und/oder die Durchführung sich anschließender Prozesse effizient zu ermöglichen.

Zumindest eine dieser Aufgaben wird gelöst durch ein Verfahren zur Unterstützung eines Absortiervorgangs nach Anspruch 1, durch eine Flachbettwerkzeugmaschine nach Anspruch 9 und ein Verfahren zum Nachrüsten nach Anspruch 14. Weiterbildungen sind in den Unteransprüchen angegeben.

In einem Aspekt umfasst ein Verfahren zur Unterstützung eines Absortiervorgangs von auf einem Sortiertisch angeordneten Werkstücken, die mit einer Flachbettwerkzeugmaschine, insbesondere einer Laserschneid- oder Stanz-Flachbettwerkzeugmaschine, mit einem Bearbeitungsplan erzeugt wurden, die folgenden Schritte:
Bereitstellen eines Bearbeitungsbilddatensatzes des Bearbeitungsplans, der der Anordnung von mindestens einem Werkstück zugrunde lag,
bildgebendes Erfassen des Sortiertischs mit einer Mehrzahl von räumlich nebeneinander angeordneten Werkstücken und darauf basierend Erzeugen eines ersten Absortierbilddatensatzes,
wiederholtes bildgebendes Erfassen des Sortiertischs und darauf basierend Erzeugen eines zweiten Absortierbilddatensatzes, nachdem mindestens ein Werkstück der Mehrzahl von räumlich nebeneinander angeordneten Werkstücken vom Sortiertisch entnommen wurde, und
Abgleichen des ersten Absortierbilddatensatzes und des zweiten Absortierbilddatensatzes unter Einbezug des Bearbeitungsbilddatensatzes, wobei ein Sortiersignal erzeugt wird, das Information, die den Typ, die Lage und/oder die Form des mindestens einen entnommenen Werkstücks umfasst, enthält.

Ein weiterer Aspekt umfasst ein Verfahren zum Nachrüsten einer Flachbettwerkzeugmaschinen-Installation mit mindestens eine Flachbettwerkzeugmaschine, insbesondere einer Laserschneid- oder Stanz-Flachbettwerkzeugmaschine, zur Ausbildung einer intelligenten Fabrik (1) mit einem Manufacturing Execution System (5). Dabei erfolgt ein Nachrüsten einer Flachbettwerkzeugmaschine mit einer oder mehreren Kameras, die zur Ausgabe von Bildinformation über einen Sortiertisch der Flachbettwerkzeugmaschine an eine Steuerungseinheit der Flachbettwerkzeugmaschine für eine Bildverarbeitung zur Teilerkennung ausgebildet sind, ein Einbinden der einen oder mehreren Kameras in das Manufacturing Execution System und ein Anpassen der Steuerungssystems und/oder des Manufacturing Execution Systems zum Ausführen des hierin offenbarten Verfahrens zur Unterstützung eines Absortiervorgangs von auf dem Sortiertisch angeordneten Werkstücken, die mit der Flachbettwerkzeugmaschine mit einem Bearbeitungsplan erzeugt wurden.

In einem weiteren Aspekt umfasst eine Flachbettwerkzeugmaschine, insbesondere Laserschneid- oder Stanz-Flachbettwerkzeugmaschine, eine Bearbeitungseinheit, insbesondere einer Laserschneid- oder Stanz-Bearbeitungseinheit, und eine Steuerungseinheit, in der ein Bearbeitungsplan abgelegt ist, zur Ansteuerung der Bearbeitungseinheit zur Erzeugung von räumlich gemäß einem Bearbeitungsbilddatensatz nebeneinander angeordneten Werkstücken. Ferner umfasst die Flachbettwerkzeugmaschine einen Sortiertisch zum Bereitstellen der angeordneten Werkstücke zum Absortieren, insbesondere durch den Bediener, nach erfolgter Herstellung, und eine Erfassungseinheit zum bildgebenden Erfassen des Sortiertischs mit einer Mehrzahl von räumlich nebeneinander angeordneten Werkstücken und Erzeugen von mindestens einem ersten Absortierbilddatensatz zu einem ersten Zeitpunkt und einem zweiten Absortierbilddatensatz zu einem zweiten nachfolgenden Zeitpunkt. Dabei ist die Steuerungseinheit zum Durchführen der hierin offenbarten Verfahren ausgebildet.

In einigen Weiterbildungen kann das Verfahren zur Unterstützung eines Absortiervorgangs einen oder mehrere der folgenden Schritte umfassen:
Ausgeben eines Ablegesignals in Abhängigkeit des Sortiersignals zur Unterstützung der Zuordnung des entnommenen Werkstücks durch einen Bediener zu einem nachfolgenden Bearbeitungsschritt, insbesondere zum Ablegen des entnommenen Werkstücks an einer Werkstücksammelstelleneinheit,
Überwachen eines von einem Bediener durchgeführten Ablegevorgangs des entnommenen Werkstücks, wobei das Überwachen eines Ablegevorgangs beispielsweise eine Gewichtsüberwachung einer spezifischen Werkstücksammelstelle und/oder eine Überwachung einer Bewegungstrajektorie oder Bewegungsteiltrajektorie des entnommenen Werkstücks oder eines die Bewegung bewirkenden Objekts umfasst,
Ausgeben eines Sortiervorgangsvollendungssignals, wenn der Ablegevorgang einem dem Sortiersignal zugeordneten Ablegevorgang entspricht, und optional Aktualisieren einer Werkstücksammelstellen-spezifischen Anzeige bzgl. der Ablage des entnommenen Werkstücks,
Ausgeben eines Fehlersignals, wenn der Ablegevorgang von einem dem Sortiersignal zugeordneten Ablegevorgang abweicht, und optional Anzeigen von Information bezüglich des dem Sortiersignal zugeordneten Ablegevorgangs,
Überwachen eines Ablegevorgangs mindestens eines entnommenen Werkstücks in einer Ausschusssammelstelle durch einen Bediener, und Zuordnen des mindestens einen entnommenen Werkstücks als Ausschussstück und optional Aufnehmen des Ausschussstücks in einer Fehlteilliste,
Ausgeben eines Ergänzungsproduktionssignals an ein Produktionsleitsystem,
Abgleichen von Produktionsparametern des entnommenen Werkstücks mit einem nachfolgenden Bearbeitungsplan, und bei Übereinstimmung der Produktionsparameter mit dem nachfolgenden Bearbeitungsplan und einer Verfügbarkeit bezüglich des entnommenen Werkstücks, Ergänzen des nachfolgenden Bearbeitungsplans mit einem Erzeugungsschritt zur Erzeugung eines Ersatzwerkstücks für das Ausschussstück,
eine Bildverarbeitung basierend auf einem aus dem ersten Absortierbilddatensatz und dem zweiten Absortierbilddatensatz erzeugten Differenzenbilddatensatz zur Lageerkennung einer Veränderung zwischen dem ersten Absortierbilddatensatz und dem zweiten Absortierbilddatensatz, eine Bildverarbeitung zur Erkennung der Form eines entnommenen Werkstücks, der Form der leer zurückgebliebenen Stelle auf dem Sortiertisch und/oder der Form der basierende auf dem Differenzenbilddatensatz erkannten Veränderung und/oder eine Bildverarbeitung für einen Vergleich der erkannten Form mit einer im Bearbeitungsprogramm hinterlegten Form, zum Beispiel als Teil des Schritts des Abgleichens des ersten Absortierbilddatensatzes und des zweiten Absortierbilddatensatzes,
Nachführen einer Änderung der Absolutlage des Ausgangsmaterials vor oder während der Bearbeitung eines Ausgangsmaterials gemäß dem Bearbeitungsplan, beispielsweise durch eine Nullpunktverschiebung oder eine Koordinatentransformation, zur Anpassung der tatsächlichen Lage des bearbeiteten Ausgangsmaterials auf dem Sortiertisch oder der angenommenen Lage gemäß Bearbeitungsplan,
Nachverfolgen der Bewegung von äußeren Kanten des Ausgangsmaterials, beispielsweise aufgrund einer globale Verschiebung der Anordnung durch ein manuelles Eingreifen eines Bedieners, basierend auf den erfassten Bilddatensätzen,
ein optisches Erfassen von optischen Bildsignalen im sichtbaren und/oder infraroten Wellenlängenbereich und/oder ein Schallwellen-basiertes Erfassen von Ultraschall-Bildsignalen und ein Verarbeiten der erfassten optischen Bildsignale und/oder Ultraschall-Signale zu dem ersten Absortierbilddatensatz bzw. dem zweiten Absortierbilddatensatz, zum Beispiel als Teil des Schritts des bildgebenden Erfassens des Sortiertischs.

Die einzelnen Verfahrensschritte können mit einer Bearbeitungszeit, insbesondere teilweise parallel, derart schnell verarbeitet werden, dass das erzeugte Sortiersignal in weniger als 0,5 s, insbesondere in weniger als 0,2 s, insbesondere in weniger als 0,1 s nach der Entnahme des Werkstücks erzeugt wird. Allgemein kann das Sortiersignal Untersignale umfassen, die jeweils einem entnommenen Werkstück zugeordnet sind, wenn z. B. mehrere Werkstücke erfasst werden. Ferner können allgemein Signale als Information auf einer Datenbrille eines Bedieners und/oder einem Überwachungsmonitor eines Steuerungssystems und/oder als Blinksignale ausgegeben werden.

In einigen Weiterbildungen der Flachbettwerkzeugmaschine kann bei der Bildverarbeitung die Lage einer Veränderung im Differenzenbild ermittelt werden. Die Bildverarbeitung erzeugt dabei das Differenzbild z. B. aus aufeinanderfolgenden Absortierbilddatensätzen, Da eine Differenzbild-basierte Analyse im Vergleich zu einem z. B. klassischen Pattern-Matching weniger durch Varianz von Oberflächen, Lichteinfall, Perspektive etc. gestört wird, kann eine höhere System-Toleranz erreicht werden. Allgemein kann somit vorteilhaft auf ein klassisches Pattern-Matching zur Werkstückidentifikation verzichten werden, da insbesondere beim Form-basierten Matching schon kleine Abweichungen eine Wiedererkennung von Bauteilen erschweren können. Gerade bei Beobachtung der Szene aus seitlicher Perspektive wäre ein derartiger klassischer Bildverarbeitungansatz erschwert, weshalb wohl derartige Ansetze bisher auch noch keine Umsetzung insbesondere bei Flachbettwerkzeugmaschinen fanden. Dagegen werden mit dem hierin offenbarten Konzepten derartige Probleme gelöst.

In einigen Weiterbildungen der Bildverarbeitung kann zusätzlich eine vor oder während dem Bearbeitungsvorgang erfolgte Veränderung der Absolutlage der Tafelgeometrie berücksichtigt werden. Dies kann beispielsweise durch von der Steuerungseinheit/dem MES bereitgestellter Information zu einer beispielsweise Nullpunktverschiebung und/oder Koordinatentransformation erfolgen, die dann die zur Anpassung der tatsächlichen Lage des Rohmaterials im Arbeitsraum in die Bildverarbeitung einfließt.

In einigen Weiterbildungen der Flachbettwerkzeugmaschine ist die Erfassungseinheit zum optischen Erfassen von Bildsignalen im sichtbaren und/oder infraroten Wellenlängenbereich und/oder ein Schallwellen-basiertes Erfassen von Ultraschall-Bildsignalen ausgebildet und umfasst entsprechende Sensoren.

Ferner kann die Flachbettwerkzeugmaschine eine bewegbare Werkstücksammelstelleneinheit, optional einer Ausschusssammelstelle umfassen. Zusätzlich oder alternativ kann sie ein System zum Überwachen eines Ablegevorgangs, insbesondere zur Gewichtsüberwachung einer spezifischen Werkstücksammelstelleneinheit und/oder Überwachung einer Bewegungstrajektorie oder Bewegungsteiltrajektorie eines entnommenen Werkstücks oder eines die Bewegung bewirkenden Objekts.

Die Werkstücksammelstelleneinheit kann ferner einen Ablegebereich für Werkstücke, die im Rahmen eines Bearbeitungsplans von der Werkzeugmaschine erzeugt wurden, und eine Anzeigeeinheit aufweisen, die dazu ausgebildet ist, von der Steuerungseinheit der Werkzeugmaschine Information über die abgelegten Werkstücke zu empfangen und für einen Bediener auszugeben. Die Anzeigeeinheit kann ferner Information über die Anzahl der abgelegten Werkstücke, einen nachfolgenden Bearbeitungsschritt und einen zugrundeliegenden Auftrag empfangen und ausgeben. Beispielsweise ist die Anzeigeeinheit eine reale, beispielsweise als E-Ink-Anzeige, am Ablegebereich angebrachte und/oder eine digital im Rahmen einer Steuerungsdarstellung emulierte Anzeigeeinheit, beispielsweise im Rahmen eines z.B. auf einem Tablet angezeigten User-Interfaces, umfasst.

Die Erfinder haben insbesondere erkannt, dass die hierin offenbarten Konzepte und deren Anwendung in den hierin beschriebenen Vorrichtungen insbesondere für spiegelnde oder teildurchsichtige Werkstücke geeignet sind und Vorteile beim Absortieren bereitstellen können. Spiegelnde oder teildurchsichtige Werkstücke umfassen z. B. Werkstücke aus Blech, Glas, Halbleitersubstrat-Strukturen, Leiterplatten-Strukturen und Kunststoffteile, wobei die Materialien selbst, und insbesondere deren Oberflächeneigenschaften, Licht transmittieren oder zumindest teilweise reflektieren können. Insbesondere bei derartigen Werkstücken wurde erkannt, dass z. B. die Erkennbarkeit von projizierten Markierungen auch bei größeren Werkstücken oft unzureichend sein kann und dadurch Bediener zusätzlich auf das Papier-basierte Absortieren zurückgreifen. Die hierin offenbarten Konzepte können dagegen gerade auch für derartige Werkstücke die Effizienz beim Absortieren steigern.

Ferner hat sich gezeigt, dass die hierin offenbarten Konzepte und deren Anwendung in den hierin beschriebenen Vorrichtungen den zusätzlichen Nutzen für den Bediener aufweisen können, dass dieser nicht an ein vorgegebenes Ablaufsteuerverfahren gebunden ist, nach welchem er die Teile abzusortieren hat. So haben Versuche mit unterschiedlichen Bedienern beim Absortieren mit und ohne Einsatz der hierin offenbarten Konzepte überraschenderweise ergeben, dass ein Absortieren meist dann schneller und effizienter erfolgt, wenn ein Bediener in der Reihenfolge des Abortierens seinem eigenen Plan nachgehen kann und nicht an eine externe Vorgabe gebunden wird. Dies beruht unter anderem evtl. auf den spezifischen Umständen beim Absortieren von Werkstücken, die mit Flachbettwerkzeugmaschinen erstellt werden. Derartig erzeugte Werkstücke kommen zusammen mit dem Schnittabfall, der z. B. in Form eines Restgitters ausgestaltet ist, auf dem Sortiertisch an. Aufgrund des Trennvorgangs können die Werkstücke oftmals noch mit dem Schnittabfall (dem Restgitter) durch winzige Restverbindungen (sogenannte Microjoints) verbunden sein. Bei Absortieren trennt der Bediener nun die Werkstücke erst vom Restgitter ab und sortiert sie dann auf Werkstück-spezifische Ablagen. Wenn einzelne Werkstücke nicht mehr ganz fest an ihrem vorgegeben Platz auf dem Sortiertisch liegen, bzw. noch mit dem Restgitter verbunden sind und so z. B. schon schräg im Restgitter hängen, kann es für den Bediener vorteilhaft sein, diese zuerst abzusortieren. Dieses Vorgehen gilt insbesondere für biegefeste Werkstücke, so dass die hierin offenbarten Konzepte und deren Anwendung in den hierin beschriebenen Vorrichtungen auch besonders geeignet für das Absortieren von biegefesten Werkstücken sein können. Ein biegefestes Werkstück kann beispielsweise aus Blech, Glas oder Kunststoff sein. Ferner sind aus einem Halbleitersubstrat oder einer Leiterplatte geschnittene (oder gestanzte) Teile oft biegefest.

Allgemein kann eine Flachbettwerkzeugmaschine eine Laserschneid- oder Stanz-Flachbettwerkzeugmaschine sein, die nur mittels Laser trennt oder die nur mittels Stanzen trennt. Ferner kann eine Flachbettwerkzeugmaschine eine Kombinationsmaschine sein, die beide Trennverfahren umsetzt. Auf der Flachbettwerkzeugmaschine können auch weitere Verarbeitungsschritte wie z.B. Entgraten, Biegen, Falzen, Schweißen, Bohren, Gewindeschneiden, etc. ausgeführt werden.

Allgemein werden die Werkstücke aus z. B. Blech, Glas, Halbleitersubstrat-Strukturen, Leiterplatten-Strukturen und Kunststoffteilen erzeugt. Die zugrundeliegenden Materialien weisen Eigenschaften auf, die eine Bildgebung mit den jeweilig einzusetzenden bildgebenden Verfahren ermöglichen. Hinsichtlich einer optischen Bildgebung können die Materialeigenschaften der Werkstücke, und insbesondere deren Oberflächeneigenschaften, Licht im sichtbaren und/oder infraroten Wellenlängenbereich auch z. B. zumindest teilweise transmittieren oder zumindest teilweise reflektieren, ohne dass die Bilddatenerfassung wesentlich beeinflusst wird. Ferner weisen die Materialien meist eine harte, insbesondere schall- und ultraschallreflektierende, Oberfläche auf, was insbesondere auch eine Ultraschall-basierte Bilddatenerfassung ermöglicht. Die angesprochenen Laserschneid- oder Stanz-Flachbettwerkzeugmaschinen werden ferner üblicherweise zur Erzeugung von Werkstücken aus einem festen Material eingesetzt, das eine Biegefestigkeit (Steifigkeit) aufweist, die zu keiner wesentlichen Verformung beim schnellen manuellen Absortieren führt.

Ferner sind die hierin offenbarten Konzepte und deren Anwendung in den hierin beschriebenen Vorrichtungen auf das Bereitstellen von unterstützender Information möglichst in Echtzeit ausgelegt. Die zeitnahe Bereitstellung ist wesentlich, da der Absortiervorgang, dessen zeitlicher Ablauf vom Fluss und der Geschwindigkeit der manuellen Vorgänge des Bedieners bestimmt wird, gerade möglichst nicht (durch z. B. Warten auf ein Sortiersignal) verlangsamt werden soll oder zumindest zeitnah eine Rückkopplung über erfolgte Tätigkeiten (z. B. der richtig oder falsch erfolgten Zuordnung zu einer Sammelstelle) gegeben werden soll. Somit ist beispielsweise eine korrekte Durchführung der Buchungen der verschiedenen Sortiervorgänge in Echtzeit wesentlich für die Implementierung der hierin offenbarten Konzepte im Rahmen einer intelligenten Fabrik. Nur bei einer zeitnahen Erkennung kann das System vernünftige Vorschläge erstellen und dem Bediener zugänglich machen. Die vorgeschlagene Absortierunterstützung führt dazu die wichtigen Schritte wie Bildgebung, Abgleich und Verbuchungen im MES z. B. automatisch im Hintergrund aus. Allgemein werden die Komponenten und Systemstrukturen derart ausgelegt, dass die einzelnen Verfahrensschritte mit einer kurzen Bearbeitungszeit, insbesondere teilweise parallel, verarbeitet werden. Bevorzugt wird das Sortiersignal z. B. in weniger als 0,5 s, insbesondere in weniger als 0,2 s, und insbesondere ferner in weniger als 0,1 s nach der Entnahme des Werkstücks erzeugt.

In einigen Ausführungsformen wird einem Bediener beim Aufnehmen eines z. B. geschnittenen Teils angezeigt, in welche Kiste (als Beispiel einer Werkstücksammelstelleneinheit) dieses zu legen ist. Die Anzeige kann insbesondere optisch erfolgen. Denkbar ist aber z. B. auch eine akustische Anzeige bzw. akustische Unterstützung einer optischen Anzeige. Dabei kann gleichzeitig automatisch eine spezifische Teilzugehörigkeit im übergeordneten System verbucht werden, sobald die Ablage erfolgte. Bei fehlenden Teilen, z. B. aufgrund von Ausschuss oder Maschinenfehlfunktionen, kann eine Nachproduktion direkt über eine Schnittstelle zu einem Produktionsleitsystem (Manufacturing Execution System: MES) initiiert werden. Das Produktionsleitsystem ist Teil eines vielschichtigen Managementsystems zur Überwachung und Durchführung einer zumindest teilautomatisierten Produktion. Es ist z. B. in die Ausführung, Steuerung oder Kontrolle der Produktion, insbesondere einzelner Produktionsschritte, in Echtzeit eingebunden.

Das Werkzeugmaschinensystem umfasst für die Ausführung der hierin offenbarten Konzepte eine Kamera (oder ein Kamerasystem bestehend aus mehreren Kameras), um den gesamten interessierenden Raum erfassen zu können. Die eine oder mehrere Kameras können beispielsweise festinstalliert am Maschinengehäuse Bildinformation des Sortiertischs einer Flachbett- oder Stanz-Laserschneidmaschine liefern. Nach Kalibrierung der Kamera des Kamerasystems auf die Blechoberfläche/den Sortiertisch kann bei den hierin offenbarten Verfahren eine Bildverarbeitungsalgorithmik zur Teilerkennung eingesetzt werden. Die in das Verfahren zur Unterstützung eines Absortiervorgangs integrierte Kamera erlaubt es somit, z. B. mittels Bildverarbeitung ein jeweils vom Bediener gegriffenes Teil, z. B. anhand seiner Form und/oder Lage auf dem Sortiertisch, zu identifizieren. Die Bildverarbeitungsalgorithmik kann insbesondere auf die Auftragsinformation zugreifen und somit eine Identifizierung der Teile erleichtern.

Ferner kann mittels Laser bzw. Markierlaser z. B. ein QR-Code oder eine Materialnummer während der Bearbeitung eingraviert werden. Mithilfe der Kamera kann diese Codierung ausgelesen und anschließend zur Identifikation und Absortierunterstützung eingesetzt werden. Alternativ oder ergänzend kann ein Bediener eine Datenbrille einsetzen, welche ergänzende Bildinformation für die Teilerkennung liefern kann und bei der zusätzlich zum real erfassten Bild der Umgebung weitere Informationen, beispielsweise der QR-Code oder eine Materialnummer, innerhalb des Sichtbereiches eingeblendet werden.

Das übergeordnete Absortiersystem kann aufgrund des Abgleichs der durch die Bilderfassung und Auswertung gewonnenen Information mit der Auftragsinformation die Werkstückerkennung unterstützen und z. B. die vorgesehene Ablage identifizieren. Z. B. wird dem Bediener über die Datenbrille die Ablage sichtbar gekennzeichnet und der Bediener erhält eine Rückmeldung, ob das Teil korrekt abgelegt wurde.

Mit der Kamera und insbesondere dem Abgleich der erfassten Bildinformation mit Schnittanweisungen des Bearbeitungsplans (z. B. eines Schneidprogramms) kann erkannt werden, dass ein produziertes Werkstück aus dem mit der Kamera überwachten Arbeitsraum entnommen wurde. Über eine Schnittstelle zum MES kann ferner ermittelt werden, zu welcher Station das Teil als nächstes zu transportieren ist. Ein optisches Signal an den auch als Ladungsträgern bezeichneten Werkstücksammelstelleneinheiten, wie Europaletten oder Transportkisten, kann dabei derart angesteuert werden, dass angezeigt wird, in welche das Teil abgelegt werden muss. Optische Signale umfassen beispielsweise spezifische Displays, eine Aktivierung von spezifischen LEDs oder eine Projektion von Information auf den Ladungsträger.

Eine Bildüberwachung und/oder ein Ortungssystem und/oder eine Sensorik am Ladungsträger kann die korrekte Ablage erkennen und überprüfen. Mit Rückmeldung an das MES kann bei Ausschussteilen, die z. B. an einer Ausschusssammelstelle abgelegt wurden, beispielsweise zum nächstmöglichen Zeitpunkt automatisch eine ergänzende Nachproduktion eingeleitet werden.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z. T. erhebliche Zeitansparung im Prozess von der Herstellung einer erforderlichen Teilanzahl bis zur nachfolgeprozesskorrekten Ablage bewirken, Fehler bei der Zuordnung vermeiden und intuitive Arbeitsabläufe durch z. B. automatische Verbuchung von Werkstücken ermöglichen. Mehrere Aufträge können in einer Tafel (z. B. zu schneidendes Blech) prozesssicher umgesetzt werden und eine auftragsübergreifende Separierung der geschnittenen Teile für die jeweiligen Folgeprozesse wird möglich. Die Handhabung der Komplexität von mehreren Aufträgen auf einer Tafel beim Absortieren ermöglicht ein automatisches (zyklisches) neues Schachteln aller offenen Aufträge gemeinsam.

So können eine flexible Abarbeitung der Teilentnahme und ein papierloser Prozessablauf (mit der begleitenden Zeiteinsparung in der Arbeitsvorbereitung), eine Einbindung von Laserschneidmaschinen oder Stanzmaschine in den teilautomatisierten Herstellungsprozess effizienter gestalten. Ferner kann durch die Fehlervermeidung und die automatische, korrekte Verbuchung die Basis für eine datenbasierte Echtzeitsteuerung der Blechfertigung gelegt werden. Entsprechend werden auch Maschinen, die bei der Erstellung von kleinen Losgrößen eingesetzt werden, in eine von MES im Rahmen der Industrie 4.0 gesteuerte Blechfertigung einbindbar.

Ferner kann der Einsatz von den Bediener einschränkenden mobilen Handgeräten wie Scanner oder Tablet entfallen.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
Fig. 1 eine schematische räumliche Darstellung eines Ausschnitts einer intelligenten Fabrik mit einer Laserschneid- oder Stanz-Flachbettwerkzeugmaschine,
Fig. 2 eine schematische räumliche Darstellung einer beispielhaften Anordnung zur bildgebenden Erfassung eines Absortierbilddatensatzes,
Fig. 3 schematische beispielhafte Darstellungen eines Bearbeitungsbilddatensatzes eines Bearbeitungsplans und zweier erfasster Absortierbilddatensätze,
Fig. 4 eine schematische räumliche Darstellung einer beispielhaften Überwachung eines Ablegevorgangs eines entnommenen Werkstücks,
Fig. 5 eine schematische räumliche Darstellung einer beispielhaften Werkstücksammelstelleneinheit und
Fig. 6 ein Flussdiagramm zur Verdeutlichung eines beispielhaften Verfahrensablaufs bei der Unterstützung eines Absortiervorgangs.

Hierin beschriebene Aspekte basieren zum Teil auf der Erkenntnis, dass bei Laserschneid- oder Stanz-Flachbettwerkzeugmaschinen das Vorliegen eines genauen Schneidplans in Kombination mit einem bildgebenden Erfassen des Sortiertischs, auf dem das erzeugte Schnittgut angeordnet ist, zur Unterstützung eines Absortiervorgangs und zum Gewinnen von für weitere Prozessabläufe geeigneter Information genutzt werden kann.

Die hierein beschriebenen Konzepte betreffen insbesondere Flachblechanlagen, die mittels Stanzen oder Laserschneiden aus sogenannten Tafeln (Ausgangsbleche mit vorbestimmter Dicke und vorbestimmten Flächenmaß) Werkstücke für nachfolgende Bearbeitungsschritte erzeugen. Insbesondere kann mit einer durch den Lasereinsatz sehr flexiblen Blechbearbeitung ein Werkstück in eine frei wählbare, bei Flachbettmaschinen flache Form überführt werden. Nachfolgende Biege- und Schweißprozesse erzeugen dann ein räumliches Produkt. Bei derartigen Laserschneid- oder Stanz-Flachbettwerkzeugmaschinen ist ein Bearbeitungsplan (z. B. Schneidplan) als Eingangsparameter in der Maschinensteuerung hinterlegt, der die genauen Formen und relative Positionen der erzeugten Werkstücke zueinander enthält. Neben dem (Schneid-) Bearbeitungsplan kann ferner zusätzliche z. B. während des Bearbeitungsvorgangs gewonnene Information, wie beispielsweise eine Koordinatentransformation zur Anpassung des (Schneid-) Bearbeitungsplans an die tatsächliche Lage des Rohblechs, genutzt werden. Derartige Information wird beispielsweise in der Steuerungseinheit mit dem (Schneid-) Bearbeitungsplan verknüpft abgelegt und bei Bedarf auch mit MES kommuniziert.

Sinkende Losgrößen, d. h. das Erfordernis in kurzen Zeitfenstern kleine Stückzahlen herstellen zu können, und überdies individualisierte Produkte sind aktuelle Herausforderungen an das Stanzen oder Laserschneidens, die sich insbesondere auf die Automatisierung von Produktionsabläufen in Blechfertigungsunternehmen auswirken. Die hierein beschriebenen Konzepte können insbesondere bei kleineren Losgrößen IT-gestützt Abläufe koordinieren und integrieren, diese einzelnen Maschinen zuordnen und bei einer anpassbaren Produktionsplanerstellung mitwirken.

Ziel ist es dabei, den hohen Anforderungen durch unterschiedlichste Produkte in sogenannten intelligenten Fabriken (den "smart Factories") gerecht zu werden. Die Erfinder haben erkannt, dass zur effizienteren Gestaltung von Fertigungsprozessen insbesondere Potenzial in den indirekten Prozessen, d.h. den dem Trennprozess vor- und nachgelagerten Schritten, liegt. Werden z. B. das Absortieren und das Ausgleichen von Ausschusswerkstücken effizienter und fehlerfreier ermöglicht, kann die Durchlaufzeit eines Auftrags über alle Fertigungsprozesse hinweg verkürzt und eine effizientere Auslastung der intelligenten Fabrik erreicht werden.

Eine transparente Fertigungsplanung, in der indirekte Prozesse vernetzte sind, bringt Übersicht in die Produktionsabläufe und erlaubt es, diese zu optimieren. Dabei wird der Bediener zum Prozessmanager, der mit seinem Überblick den Materialfluss gerade bei Aufträgen mit kleinen Losgrößen steuert.

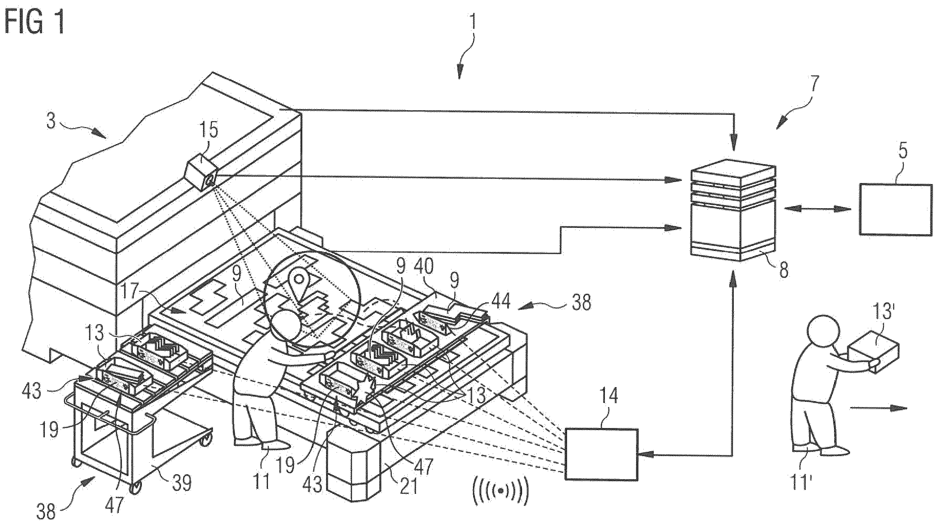

Fig. 1 zeigt eine Übersicht einer intelligenten Fabrik 1 ("smart factory"), die sich selbst anpassende Produktionsressourcen, wie eine beispielhaft dargestellte Laserschneid- oder Stanz-Flachbettmaschine 3, und ein zugehöriges MES 5 umfasst. In einem Netzwerk 7 laufen die virtuellen und physischen Produktionselemente und Produktionsschritte, insbesondere die Informationen über Werkstücke 9 (erforderliche Anzahl, Form, Material, Typ...) im MES 5 zusammen. Eine Steuerungseinheit 8, wie ein PC, Rechenknoten oder ähnliche geeignete Hardware, dient der Ansteuerung der Flachbettmaschine 3 sowie weiterer ihr zugeordneter Komponenten. Die Steuerungseinheit 8 ist insbesondere zum Unterstützen des Absortierens während eines Echtzeit-Betriebs der intelligenten Fabrik ausgebildet. Das zugrundeliegende Rechensystem weist beispielsweise digitale Prozessorsysteme mit Dateneingänge und Steuerungsausgänge aufweisenden Mikroprozessorkreisen auf, die gemäß computerlesbaren auf einem computerlesbaren Medium gespeicherten Anweisungen betrieben werden. Üblicherweise umfasst die Steuerungseinheit 8 eine hohe Rechenleistung für die Echtzeitunterstützung sowie Langzeit- (nicht volatilem) Speicher zum Speichern der Programmanweisungen als auch sehr schnellen Kurzzeit- (volatilen) Speicher zum Speichern von erfassten Daten und Auswertungsergebnissen während (oder sich ergebend aus) der Bilddatenerfassung und der Bilddatenverarbeitung.

Fig. 1 zeigt ferner zwei Absortiervorrichtungen 38, eine als Wagen 39, und eine über dem Sortiertisch 21 verfahrbare Brücke 40. Auf den Absortiervorrichtungen 38 stehen jeweils mehrere Werkstücksammelstelleneinheiten 13. An jeder Werkstücksammelstelleneinheit 13 befindet sich eine Anzeigeeinheit 43 mit einer Anzeige 19 und eine Signalabgabevorrichtung 47.

Ein Bediener 11 sortiert die Werkstücke 9, die einer von der Flachbettmaschine 3 ausgegebenen Tafel 17 entnommen wurden, den Werkstücksammelstelleneinheiten 13 zu. Dabei wird ihm nach Entnahme der Werkstücke 9 von der entsprechenden Signalabgabevorrichtung 47 angezeigt, zu welcher Werkstücksammelstelleneinheit 13 er das Werkstück 9 legen soll. Auf der Anzeige 19 wird der Status (allgemein Werkstückinformation) angezeigt, z.B. die Anzahl der abgelegten Werkstücke 9, wie viele noch fehlen oder ob ein Fehler erkannt wurde. Ferner ist in Fig. 1 eine kombinierte Signal-/Anzeigeeinheiten 44 auf der Brücke 40 gezeigt, die großen Werkstücken zugeordnet ist.

Ein Bediener 11, dem als "augmented operator" umfassende Informationen möglichst in Echtzeit zur Verfügung gestellt werden, steuert und überwacht die Fertigung. Als Erfahrungsträger und Entscheider behält der Bediener 11 die finale Entscheiderfünktion in allen relevanten Abläufen des Produktionsnetzwerks. So kann er Zielvorgaben situativ und kontextabhängig beeinflussen, unterstützt von IT-basierten Assistenzsystemen, wie dem hierin offenbarten Verfahren zur Unterstützung eines Absortiervorgangs und den hierin offenbarten Werkstücksammelstelleneinheiten 13.

Die Flachbettmaschine 3 ist mit Hinblick auf die Produktionsplanung eine mit anderen Komponenten in Kontakt stehende "social machine", die insbesondere mit der Auftragssteuerung und dem MES 5 intelligent vernetzt ist. So kann z.B. auf mögliche Abweichungen im Schneidprozess eigenständig und situationsabhängig reagiert werden.

In einer klassischen Fertigung würde ein Bediener Arbeitspapiere zu Aufträgen immer wieder zur Hand nehmen, manuell die Aufträge starten, Teile sortieren und diese Laufzettel und Einrichteplänen zuordnen. Entsprechend häufig kann die Maschine so über längere Zeiträume still stehen.

Im Unterschied dazu optimiert die vernetzte Fertigung in der intelligenten Fabrik 1 ihre indirekten Prozesse und bringt Übersicht in die durchzuführenden Produktionsabläufe. Dabei wird der Bediener 11 zum Prozessmanager, der den Überblick behält und den Materialfluss regelt.

Allgemein ist das Abräumen und Sortieren z. B. geschnittener Teile zeitintensiv, fehleranfällig und in dieser komplexen Form (mehrere Aufträge aus einem Rohling) eine große Herausforderung. Mit den hierin vorgeschlagenen Konzepten können beispielsweise Fertigungsaufträge für kleine Stückzahlen pro Los für z. B. verschachtelte Teile effizient absortiert werden.

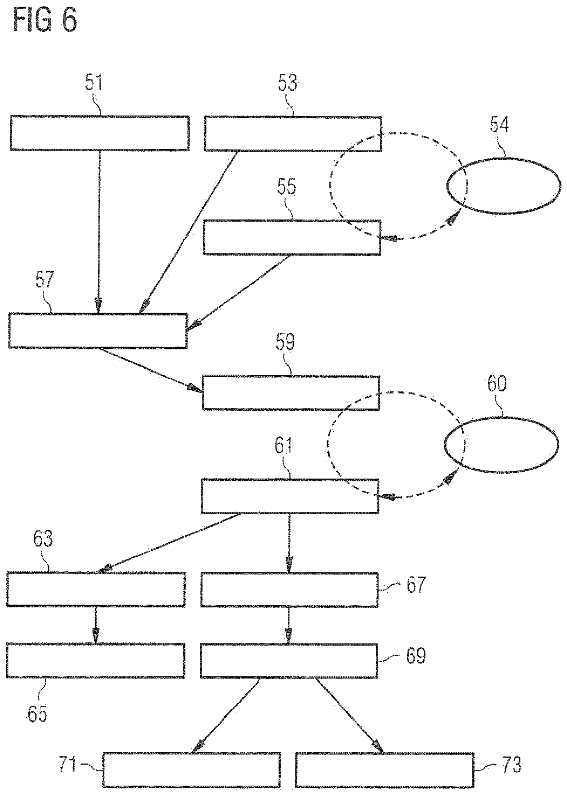

Wie nachfolgend ausführlicher erläutert wird, kann durch den Einsatz eines bildgebenden Systems, z. B. einer Kamera 15 mit Bildverarbeitung, sowie z. B. einem unterstützend bereitgestellten automatisierten Orten der Hand des Bedieners 11 erkannt werden, welches Werkstück 9 einer von der Flachbettmaschine 3 ausgegebenen Tafel 17 entnommen wurde. Anschließend kann sich eine Anzeige 19 an einer der intelligenten und vernetzten Werkstücksammelstelleneinheit 13 melden und dem Bediener 11 den z. B. vom MES 5 zugeordneten Ablageort anzeigen (siehe auch Schritte 63, 65 in Fig. 6). Die Ortung der Hand kann zusätzlich eine Verbuchung des Ablagevorgangs im MES 5 ermöglichen. Ferner können die als z. B. intelligente Kisten ausgeführten Werkstücksammelstelleneinheiten 13 auf z. B. einem e-Ink-Display aktuelle vom MES 5 erhaltene Auftragsinformationen ausgeben. Sie ermöglichen z. B. eine (evtl. räumlich grobe) elektrische Ortung und können beispielsweise durch Blinken dem Bediener eine intuitive "Feinsuche" ermöglichen. Beispielsweise sind die Werkstücksammelstelleneinheiten 13 mit einem eigenen Datenversorgungssystem 14 verbunden, welches insbesondere mit dem MES 5 und der Steuerungseinheit 8 zum Datenaustausch in Verbindung steht.

Nach erfolgter Absortierung einer Anzahl von benötigen Werkstücke in eine Werkstücksammelstelleneinheit 13' wird diese beispielsweise von einem Bediener 11' (oder automatisiert von einem Robotersystem) zu einem nachfolgenden Bearbeitungsschritt gebracht.

Die hierin vorgeschlagene Lösung erfolgt über einen elektronischen Assistenten, der den Bediener 11 informationsseitig mittels situativer Informationsbereitstellung unterstützt. Diese erlaubt es dem Bediener 11 weiterhin individuelle Präferenzen (wie: wo fange ich an, lege ich kleine Handpuffer an oder nicht, ...) bei der Absortierung umzusetzen. Die Lösung folgt dem Grundprinzip: Beobachten, Auswerten und situativ benötigte Informationen bereitstellen.

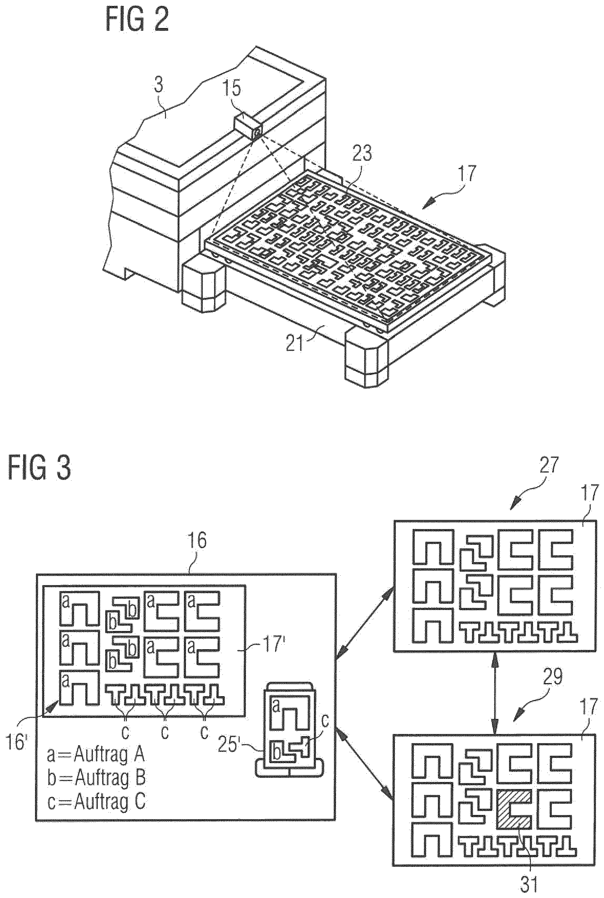

Figuren 2 und 3 zeigen beispielhaft wie ein Absortierbilddatensatz mit einem die Kamera 15 umfassenden Kamerasystem zur bildgebenden Erfassung gewonnen und verarbeitet wird (siehe auch Schritte 53, 55, 57 in Fig. 6). Um entnommene Teile erkennen zu können, erfasst die Kamera 15 einen Sortiertisch 21 der Flachbettmaschine 3, und insbesondere den Arbeitsraum 23 über der bearbeiteten Tafel, die absortiert werden soll. Die Absortierung erfolgt durch einen Bediener 11, im Ausführungsbeispiel in Gestalt eines lebenden Menschen, also keinem Roboter. Um die Position des z. B. geschnittenen Blechs auf der Palette bestimmen zu können, muss die Kamera 15 auf die Maschinenkoordinaten kalibriert sein. Die Kamera ist Teil eines bildgebenden Systems, das beispielsweise optisch im sichtbaren und/oder infraroten Wellenlängenbereich und/oder mit Schallwellen, insbesondere Ultraschallwellen, ein Bild des Sortiertischs 21 mit den zu sortierenden Teilen erfasst. Entsprechend umfasst die Kamera eine Sensorik zur Aufnahme von Bildsignalen in den Wellenlängenbereichen. Das bildgebende System umfasst eine Bildverarbeitungseinheit zur Erzeugung des Bildes aus den Bildsignalen.

Auf der Steuerungseinheit 8 mit Schnittstelle zur Kamera 15 und zur Flachbettmaschine 3 wird mit geeigneten Verfahren der Bildverarbeitung (z. B. Differenzbilderzeugung) erkannt, wenn ein Werkstück 9 vom Sortiertisch 21 entnommen wird. Dafür rekonstruiert die Software über die Schnittstelle zur Flachbettmaschine 3 aus dem Bearbeitungsprogramm die Belegung der Tafel 17 und die Umrisse der z. B. geschnittenen Werkstücke 9.

Fig. 3 zeigt schematisch einen Bearbeitungsplan 16 mit einem Bearbeitungsbilddatensatz 16', der der Anordnung von mindestens einem Werkstück 9 auf dem Sortiertisch 21 zugrunde lag (siehe auch Schritt 51 in Fig. 6). Man erkennt beispielhaft geplante Formteile in drei Typen a, b, c auf einer schematischen Tafel 17', die drei Aufträgen A, B, C zugeordnet sind. Ferner erkennt man, dass die erzeugten Formteile nach den Typen a, b, c auf einem Wagensymbol 25' als Werkstücksammelstelleneinheiten in drei Stapel sortiert werden sollen.

Fig. 3 zeigt ferner schematisch ein erstes Kamerabild 27 der Tafel 17 mit den daraus ausgeschnittenen Formteilen, das direkt nach dem Schneidvorgang, d. h. vor dem ersten Abnehmen eines Formteils, zu einem ersten Zeitpunkt erfasst wurde. Ein weiteres Kamerabild 29 zeigt die Tafel 17 nach dem ersten Abnehmen eines Formteils a (gestrichelter Bereich 31 in Fig. 3), d. h. zu einem zweiten (dem ersten Zeitpunkt nachfolgenden) Zeitpunkt.

Über eine ständige Erzeugung eines z. B. Differenzbildes zwischen dem realen Kamerabild und einem Referenzbild kann eine Änderung festgestellt werden, die auf ein entnommenes Werkstück hinweist. Ein Abgleich mit z. B. einer virtuellen Überlagerung des Bearbeitungsbilddatensatzes des CNC-Programms oder eines Formteil-Typs kann dann das entnommene Werkstück identifizieren. Damit wird eindeutig erkannt, wenn ein Teil entnommen wurde und welches Teil entnommen wurde. Nach jedem entnommenen Teil kann das Referenzbild mit der neuen Szene aktualisiert werden.

Der Abgleich kann dabei auch ein Nachführen der Absolutlage der Tafel mit den z. B. ausgeschnittenen Werkstücken erfolgen. Dies kann beispielsweise durch ein zusätzliches Erfassen der äußeren Kanten des Rohblechs erfolgen. Das Nachführen erlaubt es, dass eine globale Verschiebung der Anordnung, z. B. durch das manuelle Eingreifen des Bedieners, ausgeglichen werden kann.

Ferner kann die Flachbettmaschine 3 zum Eingravieren von Werkstück-spezifischen QR-Codes oder Materialnummern ein Lasersystem aufweisen (beispielsweise einen zusätzlichen Markierlaser oder einen entsprechend einstellbaren Schneidlaser). Wurde ein Werkstück mit einem QR-Code oder einer Materialnummer während der Bearbeitung versehen, kann anschließend das Kamerasystem diese Codierung zusätzlich erkennen und auslesen. Dies kann eine schnellere Zuordnung eines Werkstücks z. B. zu den im Bearbeitungsplan hinterlegten und zu erzeugenden Werkstücken und/oder zu weiteren im MES 5 hinterlegten Verarbeitungsschritten erlauben.

Um dem Bediener 11 mitteilen zu können, was mit dem entnommenen Teil als nächstes passieren soll (klassischerweise wird es zum Weitertransport in eine Kiste als Werkstücksammelstelleneinheit 13 gelegt), hat die Steuerungseinheit 8 Zugriff auf das MES 5. Dort sind nicht nur der nächste Standort (in welche Kiste muss das Teil gelegt werden), sondern auch weitere Informationen wie z. B. Material, Auftragsnummer, Kunde usw. hinterlegt.

Die Werkstücksammelstelleneinheiten 13 besitzen ebenfalls eine Kommunikationsschnittstelle zur Steuerungseinheit 8 und können Informationen zum Auftrag z. B. über ein E-Ink-Display als Anzeige 19 ausgeben. Über die Schnittstelle sind die Werkstücksammelstelleneinheiten 13 damit außerdem in der Lage, dem Bediener 11 bei Aufnahme eines Werkstücks 9 anzuzeigen, in welche Kiste er es ablegen soll (siehe auch Schritt 59 in Fig. 6). Über eine eingebaute Waage oder andere geeignete Sensoreinheit kann festgestellt werden, ob der Bediener 11 das Werkstück 9 in die richtige Kiste abgelegt hat (siehe auch Schritt 61 in Fig. 6). Entsprechend kann ein Feedback, z. B. über einen Zähler auf dem E-Ink-Display gesendet werden. Somit kann in der Steuerungseinheit 8 abgeglichen werden, ob alle Teile korrekt absortiert wurden oder ob Teile des Auftrags fehlen, die zum Beispiel durch das Restgitter gefallen sind.

Denkbar ist auch der Fall, dass der Bediener 11 beim Absortieren ein fehlerhaft produziertes Teil erkennt und dieses in eine für Ausschuss bereitstehende Sammelstelle ablegt (siehe auch Schritt 69 in Fig. 6). In einem weiteren Fall zeichnet die Flachbettmaschine 3 während der Tafel-Produktion automatisch Fehlschnitte, manuelle Bedienereingriffe oder gar Kollisionen auf und verbucht über die Schnittstelle zur Steuerungseinheit 8 betroffene Teile als Ausschuss. Für derartige und insbesondere alle beschriebenen Fälle kann automatisch ein Auftrag zur Nachproduktion der identifizierten Ausschussteile im MES 5 erstellt und eingeplant werden (siehe auch Schritt 73 in Fig. 6).

Über die Erweiterung des Systems mit einer Innenraum-Ortung und Schnittstellen zur Steuerungseinheit 8 können ferner die Position der Werkstücksammelstelleneinheiten festgestellt und/oder die Bewegung der Hand des Bedieners 11 festgehalten werden. Solch eine Ortung kann z. B. über ein Ultra-Wide-Band-System aus vier oder mehr so genannten "Anchors" und ein oder mehr "Tags" erfolgen. Die Anchors dienen als Receiver und können um den Arbeitsraum 23 stationär positioniert werden. Die Tags werden an allen Werkstücksammelstelleneinheiten und der Hand des Bedieners 11 angebracht und dienen zur Positionsbestimmung derselben. Weitere Systeme zur Innenraum-Ortung umfassen z. B. Bluetooth, WiFi, Infrarot und RFID.

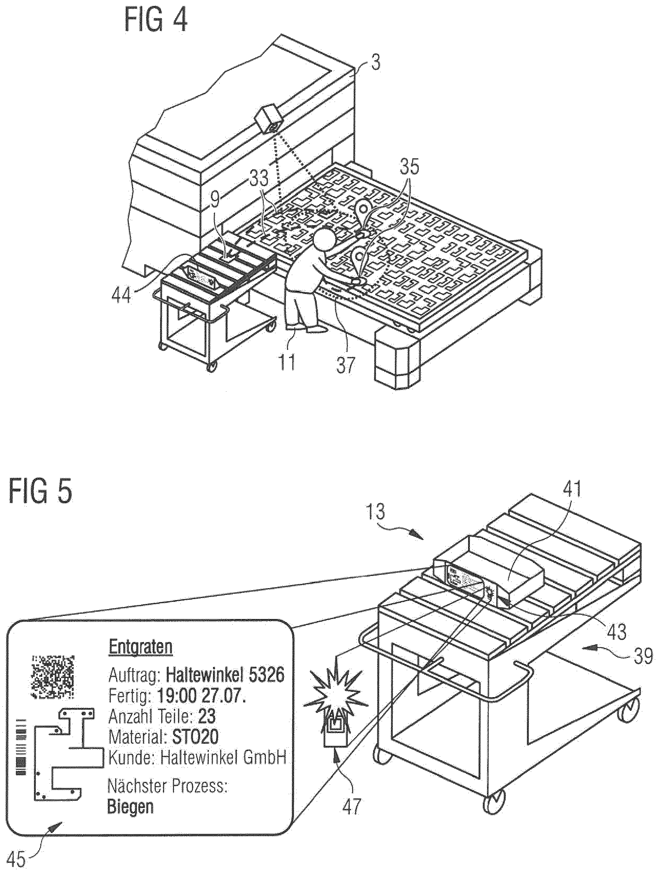

Wie in Fig. 4 verdeutlicht wird, kann durch Tracking der Hand des Bedieners 11 festgestellt werden, ob die Werkstücke 9 in die richtigen Kisten abgelegt wurden. Beispielhaft sind in Fig. 4 Bewegungstrajektorien 33 der Hand beim Entnehmen eines Werkstücks 9 gezeigt. Ferner kann durch die Tracking-Information das Verfahren zur Erkennung eines entnommenen Teils verbessert werden. Durch die Lokalisierung der Hand (z. B. Positionen 35), deren Bewegungstrajektorie oder Bewegungsteiltrajektorie wird eine interessierende Region 37 ("region of interest") im Bildbereich definiert. Die Bildverarbeitung muss damit nicht in jedem Rechenschritt den gesamten Arbeitsraum 23 nach Veränderungen absuchen, sondern lediglich die interessierende Region 37 um die Hand des Bedieners 11. Arbeiten mehrere Bediener 11 beim Absortiervorgang, kann gleichzeitig am Sortiertisch 21 für jeden Bediener 11 eine interessierende Region definiert werden. Jedem Bediener 11 können damit individuelle Informationen zum korrekten Ablageort des Werkstücks übermittelt werden.

Neben dem zuvor explizit angesprochenen Ansatz, die Logik und Rechenleistung in einem zentralen Rechenknoten (Steuerungseinheit) auszuführen, sind andere bekannte Topologien zur Vernetzung von Flachbettmaschine 3, Kamera 15 (allgemein einem bildgebenden System), Kisten mit Werkstücksammelstellen, MES 5 und Ortungssystemen einsetzbar.

Des Weiteren können die Funktion, Daten am Ablageort anzuzeigen, und die Kontrolle des Ablegens mit einer Datenbrille erfolgen. Über derartige "Augmented-Reality"-Brillen können neben der Anzeige des ortsfixen korrekten Ablageortes auch dessen Sollhöhe exakt angezeigt werden. Beispielsweise kann eine "Hololens"-Datenbrille die Anzeige von ortsfixen holografischen 3D-Objekten ermöglichen. Der Bediener 11 kann damit sehr einfach kontrollieren, ob ein Stapel von Werkstücken komplett ist.

In weiteren Ausführungsformen, die Datenbrillen einsetzen, stehen nach der Teileerzeugung diese dem Bediener 11 in einem Restgitter-Teileverbund zur Verfügung. Über die Steuerungseinheit 8 und das MES 5 ist bekannt, welches Teil sich an welcher Position in diesem Verbund befindet und an welchen Ablageort es gebracht werden soll. Der Bediener 11 erhält mit der Datenbrille eine Rückmeldung, ob das Teil erfolgreich erkannt wurde, oder einen Vorschlag für eine Retry-Strategie.

Dem Bediener 11 kann ferner über die Projektionsfläche der Datenbrille eine optimale Absortierstrategie vorgeschlagen werden, auch wenn er trotzdem nach einer selbst gewählten Strategie absortieren kann. Bei vielen Kleinteilen kann dem Bediener 11 z. B. vorgeschlagen werden, gleich mehrere gleiche Teile zu entnehmen. Durch einen Algorithmus kann begleitend in Echtzeit berechnet und angezeigt werden - z. B. abhängig von Ausdehnung und Gewicht der einzelnen Teile - wie viele Teile auf einmal entnommen werden können. Dies kann ferner je nach Bediener individuell anpassbar sein. Ferner kann dem Bediener 11, falls er ein Formteil des Typs a aufgenommen hat, die Lage weiterer Teile des gleichen Typs, beispielsweise entlang einer günstigen Bewegungstrajektorie, angezeigt werden. Dadurch können z. B. unnötige Wege vermieden werden.

Nachdem ein genommenes Teil erfolgreich eingelesen wurde, gibt die Steuerungseinheit 8 als Leitsystem, z. B. über die Projektionsfläche der Datenbrille den korrekten Ablageort an den Bediener 11 aus. Dies kann z. B. ein nummeriertes Lagerfach sein. Sollte das Lagerfach an einer weiter entfernten Position sein, kann über die Projektionsfläche der Datenbrille auf einen Lageplan auf den Ablagebereich verwiesen werden. Die unterstützende Kamera der Datenbrille kann ferner das Lagerfach erkennen, sobald es sich innerhalb des sichtbaren Bereiches befindet und markiert es auf der Projektionsfläche.

Das Leitsystem überwacht ferner während des Ablegens, ob das Teil in das richtige Fach gelegt wurde, und gibt entsprechend über die Projektionsfläche der Brille eine Rückmeldung an den Bediener 11. Verschiedene auf dem Markt verfügbare Datenbrillen, die idealerweise mit eigenem GPS-Koordinatensystem versehen oder mit einem externen Ortungssystem koppelbar sind, können somit in die hierin vorgeschlagenen Konzepte eingebunden werden.

Fig. 5 zeigt eine Werkstücksammelstelleneinheit 13 auf einem Wagen 39. Die Werkstücksammelstelleneinheit 13 umfasst einen Ablegebereich 41 für Werkstücke 9, die im Rahmen eines Bearbeitungsplans von einer Werkzeugmaschine erzeugt wurden. Die Werkstücksammelstelleneinheit 13 weist ferner eine Anzeigeeinheit 43 auf, die dazu ausgebildet ist, z. B. von der Steuerungseinheit 8 der Werkzeugmaschine Information 45 über die in der Werkstücksammelstelleneinheit 13 abgelegten Werkstücke zu empfangen und für einen Bediener auszugeben.

Beispielsweise ist die Anzeigeeinheit 43 z. B. dazu ausgebildet, Information über die Anzahl der abgelegten Werkstücke 9, noch fehlende Werkstücke, einen nachfolgenden Bearbeitungsschritt, einen zugrundeliegenden Auftrag (Kunde), Soll-Material etc. zu empfangen und auszugeben.

Die Anzeigeeinheit 43 kann dabei eine reale, beispielsweise als E-Ink-Anzeige (auch als elektronische Papier-Anzeige bezeichnet), am Wagen 39 angebrachte Anzeigeeinheit sein. Alternativ oder ergänzend kann eine digital im Rahmen einer Steuerungsdarstellung emulierte Anzeigeeinheit, beispielsweise im Rahmen eines z.B. auf einem Tablet angezeigten User-Interfaces, verwendet werden.

Neben dem zuvor explizit angesprochenen Ansatz von E-Ink-Anzeigen können Anzeigedaten und Feedback der Kisten bei Erkennung eines abgelegten Teils auch über ein Aktivieren einer Signalabgabevorrichtung 47, beispielsweise einer oder mehrerer LEDs, eines aktiven LCD-Displays, einer akustischen Signalquelle, oder durch Projektion mit einem Beamer oder mit einem Laser-Scanner gegeben werden. Ferner können (ergänzende) Kontrollmessungen der korrekten Ablage mit einer Waage, einer Höhenmessung eines Stapels (optische Meßverfahren, wie z. B. Laserscanner) oder einer bildbasierten Kontrolle (Kamerazählsysteme) eingesetzt werden. Ebenfalls kann (ergänzend) ein Erschütterungssensor (beispielsweise ein Beschleunigungssensor) verwendet werden. Allgemein ist die Signalabgabevorrichtung 47 zum Ausgeben von Feedback-Signalen an einen Bediener ausgebildet ist. Ferner können die Anzeigeneinheit 43 und die Signalabgabevorrichtung 47 in einer Einheit zusammengefasst werden.

Zusammenfassend zeigt Fig. 6 ein Flussdiagramm zur Verdeutlichung eines beispielhaften Verfahrensablaufs bei der Unterstützung eines Absortiervorgangs. Dabei wird davon ausgegangen, dass auf einem Sortiertisch Werkstücke angeordnet sind, die mit einer Flachbettwerkzeugmaschine, insbesondere einer wie zuvor beschriebenen Laserschneid- oder Stanz-Flachbettwerkzeugmaschine, basierend auf einem Bearbeitungsplan erzeugt wurden.

In der Steuerungseinheit 8 wird ein Bearbeitungsbilddatensatz des Bearbeitungsplans (siehe z. B. den Bearbeitungsbilddatensatz 16' in Fig. 3) bereitgestellt (Schritt 51), der der Anordnung der erzeugten Werkstücken zugrunde lag. Ferner wird der Sortiertisch mit der Mehrzahl von räumlich nebeneinander angeordneten Werkstücken bildgebend, z. B. optisch im sichtbaren oder infraroten Wellenlängenbereich, oder mit Schallwellen, insbesondere Ultraschallwellen, erfasst, um einen ersten Absortierbilddatensatz (siehe z. B. das erste Kamerabild 27 in Fig. 3) zu erzeugen (Schritt 53).

Es folgt eine Entnahme mindestens eines Werkstücks vom Sortiertisch (Schritt 54) und eine Wiederholung der bildgebenden Erfassung des Sortiertischs, basierend auf der ein zweiter Absortierbilddatensatz erzeugt wird (Schritt 55).

Nun werden der erste Absortierbilddatensatz und der zweite Absortierbilddatensatz unter Einbezug des Bearbeitungsbilddatensatzes - beispielsweise mit einem Bildverarbeitungsalgorithmus - abgeglichen (Schritt 57), um ein Sortiersignal zu erzeugen. Das Sortiersignal umfasst Information über den Typ, die Lage und/oder die Form und optional Ortungsinformation des mindestens einen entnommenen Werkstücks. Es kann ferner angeben, ob und wie mit dem mindestens einen entnommenen Werkstück weiter zu verfahren ist. Das Sortiersignal kann der Steuerungseinheit 8 und/oder dem MES 5 übermittelt werden und nachgeordnete Prozesse auslösen.

Das Abgleichen des ersten Absortierbilddatensatzes und des zweiten Absortierbilddatensatzes kann eine Bildverarbeitung zur Erkennung der Form eines entnommenen Werkstücks oder der Form der leer zurückgebliebenen Stelle auf dem Sortiertisch und/oder eine Bildverarbeitung für einen Vergleich der erkannten Form mit einer im Bearbeitungsprogramm hinterlegten Form umfassen.

Ferner kann ein Ablegesignal in Abhängigkeit des Sortiersignals zur Unterstützung der Zuordnung des entnommenen Werkstücks durch einen Bediener zu einem nachfolgenden Bearbeitungsschritt ausgegeben werden (Schritt 59). Z. B. wird ein auftragsgemäßes Ablegen des entnommenen Werkstücks an einer dem Auftrag entsprechenden Werkstücksammelstelle angeregt. Dies kann beispielsweise ein Blinken einer zugehörigen Kiste, eine spezielle Anzeige auf einer der Kiste zugeordneten Anzeige und/oder ein Einblenden einer Markierung der zugehörigen Kiste in ein Display einer Datenbrille umfassen.

Dabei kann ein von einem Bediener durchgeführter Ablegevorgang (Schritt 60) des entnommenen Werkstücks überwacht werden (Schritt 61). Das Überwachen des Ablegevorgangs umfasst z. B. eine Gewichtsüberwachung einer spezifischen Werkstücksammelstelle und/oder ein Überwachen einer Bewegungstrajektorie oder Bewegungsteiltrajektorie des entnommenen Werkstücks oder eines die Bewegung bewirkenden Objekts (siehe z. B. Fig. 4).

Wenn der Ablegevorgang einem dem Sortiersignal zugeordneten Ablegevorgang entspricht, kann ein Sortiervorgangsvollendungssignal ausgegeben werden (Schritt 63), beispielsweise wieder durch ein Blinksignal, spezielle Ausgaben auf einer Anzeige z. B. der Werkstücksammelstelleneinheit und/oder eine Markierung im Datenbrillendisplay. So kann z. B. eine Werkstücksammelstellen-spezifische Anzeige bzgl. der Ablage des entnommenen Werkstücks aktualisiert werden (Schritt 65).

Sollte der Ablegevorgang von einem dem Sortiersignal zugeordneten Ablegevorgang abweichen, kann ein Fehlersignal ausgegeben werden (Schritt 67), beispielsweise wieder durch ein Blinksignal an der Werkstücksammelstelleneinheit, spezielle Ausgaben auf einer Anzeige an der Werkstücksammelstelleneinheit und/oder eine Markierung im Datenbrillendisplay. Begleitend kann Information bezüglich des dem Sortiersignal zugeordneten richtigen Ablegevorgangs wiederholt dargestellt werden.

Ferner kann z. B. überwacht werden, ob bei einem Ablegevorgang mindestens ein entnommenes Werkstück in einer Ausschusssammelstelle durch einen Bediener abgelegt wurde (Schritt 69). Das entnommene Werkstück kann vom MES 5 als Ausschussstück vermerkt werden, z. B. optional in einer Fehlteileliste aufgenommen werden (Schritt 71).

Für erkannte Ausschussteile kann ein Ergänzungsproduktionssignal an ein Produktionsleitsystem ausgegeben werden. Dort werden z. B. Produktionsparameter des entnommenen Werkstücks mit einem nachfolgenden Bearbeitungsplan abgeglichen. Bei Übereinstimmung der Produktionsparameter mit dem nachfolgenden Bearbeitungsplan und einer Verfügbarkeit einer erneuten Erzeugung des entnommenen Werkstücks, kann der nachfolgende Bearbeitungsplan mit einem Erzeugungsschritt zur Erzeugung eines Ersatzwerkstücks für das Ausschussstück ergänzt werden (Schritt 73). Die Erzeugung eines Ersatzwerkstücks kann auch in späteren, nachfolgenden Bearbeitungsplänen vorgesehen werden.

Wie in Fig. 6 mit gestrichelten Pfaden angedeutet wird, können verschiedene Schritte des Verfahrens wiederholt erfolgen, um eine kontinuierliche Echtzeit-Überwachung und Unterstützung des Absortiervorgangs zu gewährleisten.

Die offenbarte Werkstücksammelstelleneinheit 13, die Flachbettwerkzeugmaschine 3, das Kommunikationssystem, und/oder das Verfahren können insbesondere auch für Werkstücke 9 und/oder Formteile a, b, c mit mehr als vier Ecken und/oder mehr als vier Kanten verwendet werden.

## Patentansprüche

1. Verfahren zur Unterstützung eines Absortiervorgangs von auf einem Sortiertisch (21) angeordneten Werkstücken (9), die mit einer Flachbettwerkzeugmaschine, insbesondere einer Laserschneid- oder Stanz-Flachbettwerkzeugmaschine (3), mit einem Bearbeitungsplan (16) erzeugt wurden, mit den Schritten:
Bereitstellen (Schritt 51) eines Bearbeitungsbilddatensatzes (16') des Bearbeitungsplans (16), der der Anordnung von mindestens einem Werkstück (9) zugrunde lag,
bildgebendes Erfassen (Schritt 53) des Sortiertischs (21) mit einer Mehrzahl von räumlich nebeneinander angeordneten Werkstücken (9) und darauf basierend Erzeugen eines ersten Absortierbilddatensatzes (27),
wiederholtes bildgebendes Erfassen (Schritt 55) des Sortiertischs (21) und darauf basierend Erzeugen eines zweiten Absortierbilddatensatzes (29), nachdem mindestens ein Werkstück (9) der Mehrzahl von räumlich nebeneinander angeordneten Werkstücken (9) vom Sortiertisch (21) entnommen wurde, und
Abgleichen (Schritt 57) des ersten Absortierbilddatensatzes (27) und des zweiten Absortierbilddatensatzes (29) unter Einbezug des Bearbeitungsbilddatensatzes (16'), wobei ein Sortiersignal erzeugt wird, das eine Information, die den Typ, die Lage und/oder die Form des mindestens einen entnommenen Werkstücks (9) umfasst, enthält.

2. Verfahren nach Anspruch 1, ferner mit
Ausgeben (Schritt 59) eines Ablegesignals in Abhängigkeit des Sortiersignals zur Unterstützung der Zuordnung des entnommenen Werkstücks (9) durch einen Bediener (11) zu einem nachfolgenden Bearbeitungsschritt, insbesondere zum Ablegen des entnommenen Werkstücks an einer Werkstücksammelstelleneinheit (13),
wobei optional das Ablegesignal als Information auf einer Datenbrille eines Bedieners (11) und/oder eines Überwachungsmonitors eines Steuerungssystems (8) und/oder als Blinksignale ausgegeben werden.

3. Verfahren nach Anspruch 1 oder 2, ferner mit
Überwachen (Schritt 61) eines von einem Bediener (11) durchgeführten Ablegevorgangs des entnommenen Werkstücks (9), wobei das Überwachen eines Ablegevorgangs umfasst
eine Gewichtsüberwachung eine spezifischen Werkstücksammelstelle (13) und/oder eine Überwachung einer Bewegungstrajektorie (35) oder Bewegungsteiltrajektorie des entnommenen Werkstücks (9) oder eines die Bewegung bewirkenden Objekts.

4. Verfahren nach einem der vorhergehenden Ansprüche, ferner mit
Ausgeben (Schritt 63) eines Sortiervorgangsvollendungssignals, wenn der Ablegevorgang einem dem Sortiersignal zugeordneten Ablegevorgang entspricht, und optional
Aktualisieren (Schritt 65) einer Werkstücksammelstellen-spezifischen Anzeige (43) bzgl. der Ablage des entnommenen Werkstücks (9).

5. Verfahren nach einem der vorhergehenden Ansprüche, wobei das Sortiersignal Untersignale umfasst, die jeweils einem entnommenen Werkstück (9) zugeordnet sind, wenn mehrere Werkstücke erfasst werden.

6. Verfahren nach einem der vorhergehenden Ansprüche, ferner mit
Überwachen (Schritt 69) eines Ablegevorgangs mindestens eines entnommenen Werkstücks (9) in einer Ausschusssammelstelle durch einen Bediener (11),
Zuordnen des mindestens einen entnommenen Werkstücks (9) als Ausschussstück und optional Aufnehmen (Schritt 71) des Ausschussstücks in einer Fehlteilliste,
Ausgeben eines Ergänzungsproduktionssignals an ein Produktionsleitsystem (5),
Abgleichen von Produktionsparameter des entnommenen Werkstücks (9) mit einem nachfolgenden Bearbeitungsplan, und
bei Übereinstimmung der Produktionsparameter mit dem nachfolgenden Bearbeitungsplan und einer Verfügbarkeit bezüglich des entnommenen Werkstücks (9), Ergänzen (Schritt 73) des nachfolgenden Bearbeitungsplans mit einem Erzeugungsschritt zur Erzeugung eines Ersatzwerkstücks für das Ausschussstück.

7. Verfahren nach einem der vorhergehenden Ansprüche, wobei das Abgleichen des ersten Absortierbilddatensatzes (27) und des zweiten Absortierbilddatensatzes (29)
eine Bildverarbeitung basierend auf einem aus dem ersten Absortierbilddatensatz (27) und dem zweiten Absortierbilddatensatz (29) erzeugten Differenzenbilddatensatz zur Lageerkennung einer Veränderung zwischen dem ersten Absortierbilddatensatz (27) und dem zweiten Absortierbilddatensatz (29) und/oder
eine Bildverarbeitung zur Erkennung der Form eines entnommenen Werkstücks (9), der Form der leer zurückgebliebenen Stelle auf dem Sortiertisch (21) und/oder der basierend auf dem Differenzenbilddatensatz erkannten Veränderung und/oder
eine Bildverarbeitung für einen Vergleich der erkannten Form mit einer im Bearbeitungsprogramm (16) hinterlegten Form (a, b, c) umfasst,
wobei optional vor oder während der Bearbeitung eines Ausgangsmaterials gemäß dem Bearbeitungsplan eine Änderung der Absolutlage des Ausgangsmaterials, beispielsweise durch eine Nullpunktverschiebung oder eine Koordinatentransformation, zur Anpassung der tatsächlichen Lage des bearbeiteten Ausgangsmaterials auf dem Sortiertisch oder der angenommenen Lage gemäß Bearbeitungsplan nachgeführt wird und/oder
wobei ein Nachverfolgen der Bewegung von äußeren Kanten des Ausgangsmaterials, beispielsweise aufgrund einer globalen Verschiebung der Anordnung durch ein manuelles Eingreifen eines Bedieners, basierend auf den erfassten Bilddatensätzen durchgeführt und in der Bildverarbeitung berücksichtigt wird.

8. Verfahren nach einem der vorhergehenden Ansprüche, wobei das bildgebende Erfassen (Schritt 53, Schritt 55) des Sortiertischs (21) umfasst
ein optisches Erfassen von optischen Bildsignalen im sichtbaren und/oder infraroten Wellenlängenbereich und/oder ein Schallwellen-basiertes Erfassen von Ultraschall-Bildsignalen und
ein Verarbeiten der erfassten optischen Bildsignale und/oder Ultraschall-Signale zu dem ersten Absortierbilddatensatz (27) bzw. dem zweiten Absortierbilddatensatz (29).

9. Flachbettwerkzeugmaschine, insbesondere Laserschneid- oder Stanz-Flachbettwerkzeugmaschine (3), mit
einer Bearbeitungseinheit, insbesondere einer Laserschneid- oder Stanz-Bearbeitungseinheit,
einer Steuerungseinheit (8), in der ein Bearbeitungsplan (16) abgelegt ist, zur Ansteuerung der Bearbeitungseinheit zur Erzeugung von räumlich gemäß einem Bearbeitungsbilddatensatz (16') nebeneinander angeordneten Werkstücken (9),
einem Sortiertisch (21) zum Bereitstellen der angeordneten Werkstücke (9) zum Absortieren nach erfolgter Herstellung, und
einer Erfassungseinheit (15) zum bildgebenden Erfassen des Sortiertischs (21) mit einer Mehrzahl von räumlich nebeneinander angeordneten Werkstücken (9) und Erzeugen von mindestens einem ersten Absortierbilddatensatz (27) zu einem ersten Zeitpunkt und einem zweiten Absortierbilddatensatz (29) zu einem zweiten nachfolgenden Zeitpunkt,
wobei die Steuerungseinheit (8) zum Durchführen des Verfahrens nach einem der vorhergehenden Ansprüche ausgebildet ist.

10. Flachbettwerkzeugmaschine (3) nach Anspruch 9, wobei die Erfassungseinheit (15) zum optischen Erfassen von Bildsignalen im sichtbaren und/oder infraroten Wellenlängenbereich und/oder ein Schallwellen-basiertes Erfassen von Ultraschall-Bildsignalen ausgebildet ist und entsprechende Sensoren umfasst.

11. Flachbettwerkzeugmaschine (3) nach Anspruch 9 oder 10, ferner mit
mindestens einer bewegbaren Werkstücksammelstelleneinheit (13),
optional einer Ausschusssammelstelle, und
einem System zum Überwachen eines Ablegevorgangs, insbesondere zur Gewichtsüberwachung einer spezifischen Werkstücksammelstelleneinheit (13) und
Überwachung einer Bewegungstrajektorie (33) oder Bewegungsteiltrajektorie eines entnommenen Werkstücks (9) oder eines die Bewegung bewirkenden Objekts.

12. Flachbettwerkzeugmaschine nach einem der Ansprüche 9 bis 11, wobei die Werkstücksammelstelleneinheit (13) aufweist
einen Ablegebereich (41) für Werkstücke (9), die im Rahmen eines Bearbeitungsplans (16) von der Werkzeugmaschine erzeugt wurden, und
eine Anzeigeeinheit (43), die dazu ausgebildet ist, von der Steuerungseinheit (8) der Werkzeugmaschine Information über die abgelegten Werkstücke (9) zu empfangen und für einen Bediener (11) auszugeben,
wobei optional die Anzeigeeinheit (43) der Werkstücksammelstelleneinheit (13) ferner dazu ausgebildet ist, Information über die Anzahl der abgelegten Werkstücke (9), einen nachfolgenden Bearbeitungsschritt und einen zugrundeliegenden Auftrag zu empfangen und auszugeben.

13. Flachbettwerkzeugmaschine nach Anspruch 12, wobei die Anzeigeeinheit (43) der Werkstücksammelstelleneinheit (13) eine reale, beispielsweise als E-Ink-Anzeige, am Ablegebereich (41) angebrachte und/oder eine digital im Rahmen einer Steuerungsdarstellung emulierte Anzeigeeinheit, beispielsweise im Rahmen eines z.B. auf einem Tablet angezeigten U-ser-Interfaces, umfasst und/oder eine Signalabgabevorrichtung (47), beispielsweise eine oder mehrere LEDs, ein aktives LCD-Display oder eine akustische Signalquelle, aufweist, die zum Ausgeben von Feedback-Signalen an einen Bediener (11) ausgebildet ist.

14. Verfahren zum Nachrüsten einer Flachbettwerkzeugmaschinen-Installation umfassend mindestens eine Flachbettwerkzeugmaschine, insbesondere einer Laserschneid- oder Stanz-Flachbettwerkzeugmaschine (3), zur Ausbildung einer intelligenten Fabrik (1) mit einem Manufacturing Execution System (5), mit den Schritten:
Nachrüsten einer Flachbettwerkzeugmaschine mit einer oder mehreren Kameras, die zur Ausgabe von Bildinformation über einen Sortiertisch der Flachbettwerkzeugmaschine an eine Steuerungseinheit der Flachbettwerkzeugmaschine für eine Bildverarbeitung zur Teilerkennung ausgebildet sind,
Einbinden der einen oder mehreren Kameras in das Manufacturing Execution System (5) und
Anpassen des Steuerungssystems und/oder des Manufacturing Execution Systems (5) zum Ausführen des Verfahrens zur Unterstützung eines Absortiervorgangs von auf dem Sortiertisch (21) angeordneten Werkstücken (9), die mit der Flachbettwerkzeugmaschine mit einem Bearbeitungsplan (16) erzeugt wurden, nach einem der Ansprüche 1 bis 8.

15. Verwendung einer Flachbettwerkzeugmaschine (3) nach einem der Ansprüche 9-13 und/oder eines Verfahrens nach einem der Ansprüche 1-8 für Werkstücke (9) mit mehr als vier Ecken und/oder mehr als vier Kanten.

## Claims

1. A method for supporting a sorting process of workpieces (9), which are arranged on a sorting table (21) and which have been produced with a processing plan (16) using a flatbed machine tool, in particular a laser cutting or punching flatbed machine tool (3), comprising the steps:
providing (step 51) a processing image data set (16') of the processing plan (16) underlying the arrangement of at least one workpiece (9);
imaging-based detecting (step 53) of the sorting table (21) with a plurality of workpieces (9) arranged spatially next to one another, and based thereon generating a first sorting image data set (27);
repeated imaging-based detecting (step 55) of the sorting table (21), and based thereon generating a second sorting image data set (29) after at least one workpiece (9) of the plurality of workpieces (9) arranged spatially next to one another has been removed from the sorting table (21); and
comparing (step 57) of the first sorting image data set (27) and the second sorting image data set (29) including the processing image data set (16'), wherein a sorting signal is generated containing an information including the type, the location, and/or the shape of the at least one removed workpiece (9).

2. The method of claim 1, further comprising:
outputting (step 59) of a placing signal as a function of the sorting signal for supporting the assignment of the removed workpiece (9) by an operator (11) to a subsequent processing step, in particular for placing the removed workpiece at a workpiece collecting point unit (13),
wherein optionally the placing signal is output as information on a data glass of an operator (11) and/or a monitoring monitor of a control system (8) and/or as flashing signals.

3. The method of claim 1 or 2, further comprising:
monitoring (step 61) a placing operation of the removed workpiece (9) carried out by an operator (11), wherein the monitoring of a placing operation comprises
weight monitoring of a specific workpiece collecting point (13); and/or
monitoring of a movement trajectory (35) or a part of the movement trajectory of the removed workpiece (9) or of an object effecting the movement.

4. The method of any one of the preceding claims, further comprising:
outputting (step 63) a sorting operation completion signal when said placing operation corresponds to a placing operation associated with said sorting signal; and optionally
updating (step 65) a workpiece collecting point-specific display (43) with respect to the placement of the removed workpiece (9).

5. The method of any one of the preceding claims, wherein the sorting signal comprising sub-signals each associated with a removed workpiece (9), when a plurality of workpieces is detected by imaging.

6. The method of any one of the preceding claims, further comprising:
monitoring (step 69) a placing operation of an operator (11) of at least one removed workpiece (9) in a reject collecting point;
assigning the at least one removed workpiece (9) as a rejected piece and optionally entering (step 71) the rejected piece in a list of erroneous parts.,
outputting of a supplementary production signal to a production control system (5),
comparing of production parameters of the removed workpiece (9) with a subsequent processing plan; and
when the production parameters correspond to the following processing plan and there is an availability with respect to the removed workpiece (9), supplementing (step 73) the subsequent processing plan with a production step for producing a replacement workpiece for the rejected workpiece.

7. The method of any one of the preceding claims, wherein the comparing of the first sorting image data set (27) and the second sorting image data set (29) comprises:
an image processing based on a difference image data set generated from the first sorting image data set (27) and the second sorting image data set (29) for position recognition of a change between the first sorting image data set (27) and the second sorting image data set (29); and/or
an image processing for recognizing the shape of a removed workpiece (9), the shape of the empty remaining area on the sorting table (21), and/or of the change recognized based on the difference image data set; and/or
an image processing for comparing the recognized shape with a shape (a, b, c) stored in the processing program (16),
wherein optionally before or during the processing of a starting material in accordance with the processing plan, a change in the absolute position of the starting material, for example by a zero point shift or a coordinate transformation, for adapting the actual position of the processed starting material on the sorting table or the assumed position in accordance with the processing plan is tracked; and/or
wherein a tracking of the movement of outer edges of the starting material, for example due to a global displacement of the arrangement by a manual intervention of an operator, is performed based on the acquired image data sets and taken into account in the image processing.

8. The method of any one of the preceding claims, wherein the imaging acquisition (step 53, step 55) of the sorting table (21) comprises:
an optical detecting of optical image signals in the visible and/or infrared wavelength range and/or sound wave-based detecting of ultrasonic image signals; and
a processing of the detected optical image signals and/or ultrasonic signals into the first sorting image data set (27) or the second sorting image data set (29).

9. A flatbed machine tool (3), in particular laser cutting or punching flatbed machine tool, comprising:
a processing unit, in particular a laser cutting processing unit or a punching processing unit;
a control unit (8), in which a processing plan (16) is stored, for controling the processing unit to generate workpieces (9), which are arranged next to one another spatially in accordance with a processing image data set (16');
a sorting table (21) for providing the arranged workpieces (9) for sorting after manufacture; and
a detection unit (15) for imaging the sorting table (21) with a plurality of workpieces (9) arranged spatially next to one another and generating at least one first sorting image data set (27) at a first point in time and a second sorting image data set (29) at a second subsequent point in time,
wherein the control unit (8) is adapted to perform the method according to one of the preceding claims.

10. The flatbed machine tool (3) of claim 9, wherein the detection unit (15) is adapted for optically detecting image signals in the visible and/or infrared wavelength range, and/or a sound wave-based detecting of ultrasonic image signals, and comprises corresponding sensors.

11. The flatbed machine tool (3) of claim 9 or 10, further comprising:
at least one movable workpiece collecting point unit (13);
optionally an reject collecting point; and
a system for monitoring a placing operation, in particular for
weight monitoring of a specific workpiece collecting point unit (13), and
monitoring a movement trajectory (33) or a part of the movement trajectory of a removed workpiece (9) or of an object effecting the movement.

12. The flatbed machine tool of any one of claims 9 to 11, wherein the workpiece collecting point unit (13) comprises:
a placing area (41) for workpieces (9), which have been produced by the machine tool within the framework of a processing plan (16); and
a display unit (43) adapted to receive from the control unit (8) of the machine tool information about the placed workpieces (9) and to output the information to an operator (11),
wherein optionally the display unit (43) of the workpiece collecting unit (13) is further adapted to receive and output information about the number of placed workpieces (9), a subsequent processing step, and an underlying order.

13. The flatbed machine tool of claim 12, wherein the display unit (43) of the workpiece collecting point unit (13) includes a real display unit, for example configured as an E-Ink display, and mounted at the placing area (41), and/or a display unit emulated digitally within the framework of a control presentation, for example within a user interfaces displayed, e. g., on a tablet, and/or a signal output device (47), such as one or more LEDs, an active LCD display or an acoustic signal source, adapted to output feedback signals to an operator (11).

14. A method for retrofitting a flatbed machine tool installation with at least one flatbed machine tool, in particular a laser cutting flatbed machine tool or punching flatbed machine tool (3), for building an intelligent factory (1) with a manufacturing execution system (5), the method comprising:
retrofitting a flatbed machine tool with one or more cameras, which are adapted to output image information about a sorting table of the flatbed machine tool to a control unit of the flatbed machine tool for image processing for part recognition;
integrating one or more cameras into the manufacturing execution system (5); and
adapting the control system and/or the manufacturing execution system (5) to carry out the method of supporting a sorting operation of workpieces (9) arranged on the sorting table (21) and produced with the flatbed machine tool with a processing plan (16), according to any one of claims 1 to 8.

15. Use of a flatbed machine tool (3) according to any one of claims 9-13 and/or of a method according to any one of claims 1-8 for workpieces (9) with more than four corners and/or more than four edges.

## Revendications

1. Procédé d'assistance à une opération de tri de pièces (9) disposées sur une table de triage (21), qui ont été produites avec une machine-outil à banc-plat, en particulier une machine-outil à banc plat de découpe au laser ou d'estampage (3), selon un plan d'usinage (16), avec les étapes de :
fourniture (Etape 51) d'un ensemble de données d'image d'usinage (16') du plan d'usinage (16), qui est basé sur l'agencement d'au moins une pièce (9),
saisie d'image (Etape 53) de la table de triage (21) avec une pluralité de pièces (9) disposées dans l'espace les unes à côté des autres et production en se basant sur celle-ci d'un premier ensemble de données d'image de tri (27),
saisie d'image répétée (Etape 55) de la table de triage (21) et production en se basant sur celle-ci d'un deuxième ensemble de données d'image de tri (29), d'après lequel au moins une pièce (9) de la pluralité des pièces (9) disposées dans l'espace les unes à côté des autres a été prélevée de la table de triage (21), et
actualisation (Etape 57) du premier ensemble de données d'image de tri (27) et du deuxième ensemble de données d'image de tri (29) en prenant en compte l'ensemble de données d'image d'usinage (16'), sachant qu'un signal de tri est généré, qui contient une information, qui comprend le type, la position, et/ou la forme d'au moins une pièce (9) prélevée.

2. Procédé selon la revendication 1, avec en plus émission (Etape 59) d'un signal de dépose en fonction du signal de tri destiné à l'assistance de l'attribution de la pièce (9) prélevée par un opérateur (11) à une étape d'usinage ultérieure, en particulier pour la dépose de la pièce prélevée sur une unité de points de collecte de pièces (13),
sachant qu'en option le signal de dépose est émis en tant qu'information sur des lunettes connectées d'un opérateur (11) et/ou un écran de contrôle d'un système de commande (8) et/ou sous la forme de signaux clignotants.

3. Procédé selon la revendication 1 ou 2, avec en plus contrôle (Etape 61) d'une opération de dépose de la pièce (9) prélevée, effectuée par un opérateur (11), sachant que le contrôle d'une opération de dépose comprend
un contrôle de poids d'un point de collecte de pièces (13) spécifique et/ou
un contrôle d'une trajectoire de mouvement (35) ou d'une trajectoire partielle de mouvement de la pièce (9) prélevée ou d'un objet créant le mouvement.

4. Procédé selon l'une quelconque des revendications précédentes, avec en plus
émission (Etape 63) d'un signal de terminaison d'opération de tri, lorsque l'opération de dépose correspond à une opération de dépose attribuée au signal de tri, et en option
actualisation (Etape 65) d'un affichage spécifique aux points de collecte de pièces (43) concernant la dépose de la pièce (9) prélevée.

5. Procédé selon l'une quelconque des revendications précédentes, sachant que le signal de tri comprend des sous-signaux, qui sont respectivement attribués à une pièce (9) prélevée, lorsque plusieurs pièces sont saisies.

6. Procédé selon l'une quelconque des revendications précédentes, avec en plus
contrôle (Etape 69) d'une opération de dépose d'au moins une pièce (9) prélevée dans un point de collecte de rebuts par un opérateur (11),
attribution d'au moins une pièce (9) prélevée en tant que pièce de rebut et en option enregistrement (Etape 71) de la pièce de rebut dans une liste de pièces défectueuses,
émission d'un signal de production complémentaire à un système de gestion de production (5),
actualisation des paramètres de production de la pièce (9) prélevée avec un plan d'usinage ultérieur, et
en cas de concordance des paramètres de production avec le plan d'usinage ultérieur et d'une disponibilité concernant la pièce (9) prélevée, complément (Etape 73) du plan d'usinage ultérieur avec une étape de production destinée à produire une pièce de remplacement pour la pièce de rebut.

7. Procédé selon l'une quelconque des revendications précédentes, sachant que l'actualisation du premier ensemble de données d'image de tri (27) et du deuxième ensemble de données d'image de tri (29) comprend un traitement d'image en se basant sur un ensemble de données d'image de différences généré à partir du premier ensemble de données d'image de tri (27) et du deuxième ensemble de données d'image de tri (29) à des fins d'identification de position d'une modification entre le premier ensemble de données d'image de tri (27) et le deuxième ensemble de données d'image de tri (29) et/ou
un traitement d'image pour l'identification de la forme d'une pièce (9) prélevée, de la forme du point laissé vide sur la table de triage (21) et/ou de la modification identifiée sur la base de l'ensemble de données d'image de différences, et/ou
un traitement d'image pour une comparaison de la forme identifiée avec une forme (a, b, c) mémorisée dans le programme d'usinage (16),
sachant qu'en option avant ou pendant l'usinage d'un matériau initial selon le plan d'usinage, une modification de la position absolue du matériau initial est restituée, par exemple par un décalage du zéro ou une transformation de coordonnées, pour adapter la position effective du matériau initial usiné sur la table de triage ou la position admise selon le plan d'usinage, et/ou
sachant qu'un suivi du mouvement des bords extérieurs du matériau initial est effectué, par exemple en raison d'un décalage globale de l'agencement par une intervention manuelle d'un opérateur, en se basant sur les ensembles de données d'image saisis et est pris en considération dans le traitement d'image.

8. Procédé selon l'une quelconque des revendications précédentes, sachant que la saisie d'image (Etape 53, Etape 55) de la table de triage (21) comprend
une saisie optique des signaux d'image optiques dans une gamme de longueurs d'ondes visibles et/ou infrarouge et/ou une saisie à base d'ondes sonores de signaux d'image à ultrasons et
un traitement des signaux d'image optiques saisis et/ou signaux à ultrasons pour le premier ensemble de données d'image de tri (27) et le deuxième ensemble de données d'image de tri (29).

9. Machine-outil à banc plat, en particulier machine-outil à banc plat de découpe au laser ou d'estampage (3), avec
une unité d'usinage, en particulier une unité d'usinage par découpe au laser ou d'estampage,
une unité de commande (8), dans laquelle un plan d'usinage (16) est déposé, pour la commande de l'unité d'usinage destinée à produire des pièces (9) disposées les unes à côté des autres dans l'espace selon un ensemble de données d'image d'usinage (16'),
une table de triage (21) pour fournir des pièces (9) disposées pour le triage une fois la fabrication réussie, et
une unité de saisie (15) pour la saisie d'image de la table de triage (21) avec une pluralité de pièces (9) disposées dans l'espace les unes à côté des autres et la production d'au moins un premier ensemble de données d'image de tri (27) pour un premier moment et un deuxième ensemble de données d'image de tri (29) pour un deuxième moment ultérieur,
sachant que l'unité de commande (8) est constituée pour exécuter le procédé selon l'une quelconque des revendications précédentes.

10. Machine-outil à banc plat (3) selon la revendication 9, sachant que l'unité de saisie (15) est constituée pour la saisie optique de signaux d'image dans une gamme de longueurs d'ondes visible et/ou infrarouge et/ou une saisie à base d'ondes sonores de signaux d'image à ultrasons et comprend des capteurs correspondants.

11. Machine-outil à banc plat (3) selon la revendication 9 ou 10, avec en plus
au moins une unité de points de collecte de pièces (13) mobile,
en option, un point de collecte de rebuts, et
un système destiné à contrôler une opération de dépose, en particulier pour le contrôle du poids d'une unité spécifique de points de collecte de pièces (13) et le contrôle d'une trajectoire de mouvement (33) ou une trajectoire partielle de mouvement d'une pièce (9) prélevée ou d'un objet créant le mouvement.

12. Machine-outil à banc plat selon l'une quelconque des revendications 9 à 11, sachant que l'unité de points de collecte de pièces (13) comporte
une zone de dépose (41) pour des pièces (9), qui ont été produites par la machine-outil dans le cadre d'un plan d'usinage (16), et
une unité d'affichage (43), qui est constituée pour recevoir de l'unité de commande (8) de la machine-outil, et émettre à un opérateur (11), une information concernant les pièces (9) déposées,
sachant qu'en option, l'unité d'affichage (43) de l'unité de points de collecte de pièces (13) est constituée en plus pour recevoir et émettre une information concernant le nombre des pièces (9) déposées, une étape d'usinage ultérieure et une commande de base.

13. Machine-outil à banc plat selon la revendication 12, sachant que l'unité d'affichage (43) de l'unité de points de collecte de pièces (13) comprend une unité d'affichage réelle, par exemple comme affichage à encre électronique, monté sur la zone de dépose (41) et/ou une unité d'affichage émulée numériquement dans le cadre d'une représentation de commande, par exemple dans le cadre par exemple d'une interface d'utilisateur affichée sur une tablette et/ou comporte un dispositif de transmission de signaux (47), par exemple une ou plusieurs diodes électroluminescentes (DEL), un affichage actif à cristaux liquides ou une source acoustique de signaux, qui est constituée pour émettre des signaux de réaction à un opérateur (11).

14. Procédé de rééquipement d'une installation de machine-outil à banc plat comprenant au moins une machine-outil à banc plat, en particulier une machine-outil de découpe au laser ou d'estampage (3) pour la création d'une installation de fabrication intelligente (1) avec un Système d'Exécution de la Fabrication (5) avec les étapes de :
rééquipement d'une machine-outil à banc plat avec une ou plusieurs caméras, qui sont constituées pour émettre des informations en images sur une table de triage de la machine-outil à banc plat à une unité de commande de la machine-outil à banc plat pour un traitement d'image d'identification de pièce,
intégration d'une ou plusieurs caméras dans le Système d'Exécution de la Fabrication (5), et
adaptation du système de commande et/ou du Système d'Exécution de la Fabrication (5) pour exécuter le procédé d'assistance à une opération de triage de pièces (9) disposées sur la table de triage (21), qui ont été produites avec la machine-outil à banc plat avec un plan d'usinage (16) selon les revendications 1 à 8.

15. Utilisation d'une machine-outil à banc plat (3) selon l'une quelconque des revendications 9-13 et/ou d'un procédé selon l'une quelconque des revendications 1-8 pour des pièces (9) avec plus que quatre angles et/ou plus que quatre arêtes.
